# EUROPÄISCHE PATENTANMELDUNG

(11) **EP 3 885 069 A1**
(43) Veröffentlichungstag der Anmeldung: **29.09.2021**
(21) Anmeldenummer: 20165589.1
(22) Anmeldetag: 25.03.2020
(51) Int. Cl.: B23K 26/03, B23K 26/38, B23K 31/12

(54) **QUALITÄTSKONTROLLE EINES LASERBEARBEITUNGSPROZESSES MITTELS MASCHINELLEM LERNEN**

(71) Anmelder: Bystronic Laser AG, 3362 Niederönz (CH)
(72) Erfinder: LÜDI, Andreas, 3400 Burgdorf (CH); BADER, Roland, 4933 Rütschelen (CH); SCHRANZ, Matthias, 3303 Jegenstorf (CH); BÄRTSCHI, Joël, 3048 Worblaufen (CH)
(74) Vertreter: Schwarz, Claudia

(57) **Zusammenfassung**

Die vorliegende Erfindung betrifft in einem Aspekt ein Verfahren zur Prozessüberwachung eines Laserbearbeitungsprozesses zur Schätzung einer Bearbeitungsqualität, mit folgenden Schritten, die in Echtzeit während des Bearbeitungsprozesses ausgeführt werden:
- Bereitstellen (S2) mindestens einer erfassten ersten Signalfolge mit einem ersten Merkmal von der Bearbeitungszone;
- Bereitstellen (S3) mindestens einer erfassten zweiten Signalfolge mit einem zweiten Merkmal von der Bearbeitungszone;
- Zugreifen (S4) auf ein trainiertes neuronales Netzwerk mit mindestens der erfassten ersten und zweiten Signalfolge, um ein Ergebnis zur Schätzung der Bearbeitungsqualität zu berechnen (S5).

## Beschreibung

Die Erfindung betrifft die Qualitätssicherung von Laserbearbeitungsanlagen, insbesondere Laserschneidanlagen, wie Flachbettschneidmaschinen mittels eines maschinellen Lernmodells, insbesondere mit einer tiefen neuralen Netzwerk Architektur (deep neural network - DNN).

Einerseits ist die Entwicklung von Laseranlagen bestrebt, die Maschinenautonomie deutlich zu erhöhen, damit effizienter, mit weniger Personal, produziert werden kann. Daher muss die autonome Überwachung der Maschine (z.B. Flachbettschneidmaschine) und des Prozesses ständig verbessert werden. Geeignete Sensorik und entsprechende Intelligenz werden wichtig. Moderne Schneidmaschinen brauchen vermehrt umfassende Prozess-Sensorik, womit Schneidabriss und Qualitätseinbußen (z.B. raue Schnittkanten, Gratanhaftung, Schlackenbildung etc.) erkannt werden sollen.

Andererseits ist die Einhaltung von Qualitätsstandards bei der Laserbearbeitung von höchster Bedeutung. So war es bisher im Stand der Technik z.B. vorgesehen, dass die tatsächlich erreichte Schnittqualität im Nachgang durch manuelle Inspektion bestimmt werden musste. Dieses Vorgehen entspricht nicht der oben beschriebenen Bestrebung, den Prozess weitergehender zu automatisieren. Die Leistung eines Lasers von zehn Kilowatt und mehr und die schnelle Verarbeitung stellen zudem generell hohe Anforderungen an die Steuerung der Anlage. Externe Faktoren wie unterschiedliche Qualität des Werkstückmaterials, rostiges oder überhitztes Werkstückmaterial oder Verschmutzung des Laserschutzglases oder der Laseroptik beeinträchtigen die Qualität des Schnittes. Rauhe Schnittkanten, übermäßige Gratbildung, ungleichmäßige Schnittspaltbreiten oder sogar ein Verschweißen des Schnittspalts können die Folge sein.

Die Schneidqualität ist neben der Schneidgeschwindigkeit elementar. Leider kann die Schneidqualität bisher nicht zufriedenstellend während des Schneidens in Echtzeit direkt erkannt werden, da keine sinnvolle Sicht auf die Schnittkante bzw. Schneidfront des zu bearbeiteten Materials möglich ist. Es ist höchstens eine Sicht auf eine sehr verkürzte Schneidfront möglich, aus welcher bisher kaum Informationen extrahiert werden konnten. Deshalb kann auf heutigen Maschinen, wie oben beschrieben, das geschnittene Werkstück erst nach dem Schneiden aus der Maschine genommen und auf Qualität begutachtet werden.

Mittels optischer Sensoren (Fotodioden) kann das sogenannte thermische Leuchten oder Prozessleuchten während der Bearbeitung sensorisch erfasst und zur späteren Qualitätsschätzung verwendet werden, da Untersuchungen gezeigt haben, dass eine Korrelation zwischen den beiden Parametern (Prozessleuchten und Prozessqualität) besteht.

Bereits heute haben einige Schneidmaschinen eine Prozessbeobachtung, wobei diese ziemlich einfach ausgestaltet ist. Meistens beobachtet eine Fotodiode im Schneidkopf den Prozess während des Schneidens. Wird der Prozess instabil und entsteht ein Plasmaschnitt, so leuchtet der Prozess viel stärker, was durch die Fotodiode erkannt wird. In der Folge kann die Maschine reagieren, d.h. sie kann z.B. stoppen, Korrekturmaßnahmen vornehmen (Schneidkopfdüse reinigen/ neu kalibrieren, etc.) oder auch mit reduzierter Geschwindigkeit fortfahren. Der Nutzen der lediglich mit Fotodioden ausgestatteten Prozessbeobachtung ist allerdings bescheiden. So können Schneid-Instabilitäten direkt während dem Schneiden nicht bei allen Materialien, allen Werkstückdicken und insbesondere nicht beim Brennschneiden erkannt werden. Auch Schneid- bzw. Schnittqualität wird nicht erkannt.

Im Stand der Technik ist es grundsätzlich bekannt, zur Prozessbeobachtung eine geeignete optische Sensorik einzusetzen. So zeigt die WO2018069308A1 das Beobachten der Schnittspaltbreite, wobei gezeigt wird, dass die Fokuslage des Arbeitslasers mittels Schnittspaltbreitenerkennung bestimmt werden kann. DE102009050784B4 zeigt den Einsatz von Kamera und Beleuchtung, wobei Bilder mit unterschiedlichen Lichtverhältnissen aufgenommen werden, die gemeinsam zur Beurteilung von Prozessmerkmalen ausgewertet werden.

Bekannt ist es weiterhin, Modell-basierte Klassifikationsverfahren einzusetzen, die es erfordern, dass das Modell in einer Trainingsphase angelernt wird. Dazu werden manuell oder empirisch relevante Merkmale (features) bestimmt, um die jeweilige Klassifikationsaufgabe zu lösen. So offenbart die EP2357057A1 ein Verfahren zum Überwachen der Qualität von Laserbearbeitungsprozessen, indem Signale über optische Sensoren, wie Fotodioden, erfasst werden. Aus den Signalen werden charakteristische Kennwerte berechnet und auf die entsprechenden Kennwerte bei Standard-Schneidqualität bezogen. Die Qualitätszustände werden ausgehend von den Kennwerten mithilfe von Clustering-Verfahren modelliert. Zudem werden die zu den Qualitätszuständen zugehörigen Prozessparameter mitgespeichert und für eine Regelung verwendet.

EP2365889B1 offenbart eine Prozessüberwachung welche aus Kamera- und anderen Sensordaten Kennwerte extrahiert und den aktuellen Laserbearbeitungsvorgang klassifiziert, mittels der Lage der aktuellen Kennwerte relativ zu einer vorgängig bereitgestellten Punktemenge im Kennwertraum.

Die im Stand der Technik bekannten Ansätze basieren auf der Anwendung der klassischen Merkmalsextraktion bzw. Kennwerteermittlung (engl. *feature extraction*)*.* Diese Ansätze sind jedoch in ihrer Mächtigkeit beschränkt, insbesondere, wenn damit die Schneidqualität während des Schneidens mit hoher Verlässlichkeit ermittelt werden soll oder wenn auch bisher unbekannte Zusammenhänge zwischen den Inputdaten zur Lösung der Aufgabe (hier: Beurteilung der Schneidqualität) verarbeitbar sein sollen.

Die einzige bekannte Arbeit, in welcher beim Laserschneiden bisher Deep-Learning eingesetzt wurde, ist von G. Santolini et al. [Santolini, G. et.al.: Cut Quality Estimation in Industrial Laser Cutting Machines: A Machine Learning Approach, CVPR 2019] dokumentiert. Santolini beschreibt, dass Deep Neural Networks (DNN) zur Schätzung der Schneidqualität beim Laserschneiden verwendet werden können, basierend auf Signalen von Fotodioden. Der Nachteil eines solchen Systems mit Fotodioden ist, dass keine ortsaufgelösten Daten von der Prozesszone verfügbar sind. Fotodiodensignale werden von vielen Faktoren beeinflusst, die nicht mit der Schneidqualität zusammenhängen, wie z.B. Düsenzustand und Verschmauchung. Dadurch tritt zeitliche Drift auf. Zudem können Qualitätsmerkmale nur bei dünnen Blechen geschätzt werden.

Ausgehend von dem vorstehend beschriebenen Stand der Technik hat sich die vorliegende Erfindung zur Aufgabe gestellt, einen Ansatz bereitzustellen, mit dem die Qualität während des Bearbeitungsvorganges zuverlässiger und mit einer erhöhten Spezifizität und verbesserten Testabdeckung geschätzt werden kann. Zudem soll der Ansatz robuster gegenüber Störeinflüssen (Materialbeschaffenheit, Umgebungslicht, Veränderungen des Prozessleuchtens über die Zeit etc.) sein. Insbesondere soll eine Schätzung in Echtzeit möglich sein.

Diese Aufgabe wird durch die Gegenstände der beiliegenden unabhängigen Patentansprüche gelöst, insbesondere durch ein Verfahren, eine Recheneinheit und eine Laseranlage mit einer solchen Recheneinheit sowie durch ein Computerprogrammprodukt.

In einem ersten Aspekt bezieht sich die Erfindung auf ein computer-implementiertes Verfahren zur Prozessüberwachung eines Laserbearbeitungsprozesses zur Schätzung einer Bearbeitungsqualität, mit folgenden Schritten, die während des Bearbeitungsprozesses ausgeführt werden:
- Bereitstellen mindestens einer erfassten ersten Signalfolge (z.B. Einzelbilder oder ein Videostream einer Kamera) mit einem ersten Merkmal (z.B. mit Beleuchtung) von der Bearbeitungszone;
- Bereitstellen mindestens einer erfassten zweiten Signalfolge mit einem zweiten Merkmal (z.B. ohne Beleuchtung) von der Bearbeitungszone;
- Zugreifen auf zumindest ein - rechnerimplementiertes und maschinelles - neuronales Netzwerk (z.B. deep neural network / DNN oder convolutional neural network / CNN) mit mindestens der erfassten ersten und zweiten Signalfolge, um als ein Ergebnis eine Schätzung der Bearbeitungsqualität zu berechnen und insbesondere die Bearbeitungsqualität zu klassifizieren (z.B. in zwei Klassen: GUT/Ausschuß).

Es hat sich in Untersuchungen als besonders vorteilhaft erwiesen, dass die erste Signalfolge und die zweite Signalfolge so gewählt sind, dass diese unterschiedliche Beobachtungsparameter des Schnittspalts erfassen, also Breite, Symmetrie etc. einerseits und Strahlungsschwerpunkt, Strahlungsfläche etc. andererseits.

Vorteilhafterweise werden die vorstehend genannten Schritte in Echtzeit ausgeführt. Der Begriff "Echtzeit" ist im Sinne der Norm DIN ISO/IEC 2382 und insbesondere so zu verstehen, dass er sich auf einen Zeitraum während laufender Bearbeitung durch den Laser bezieht. Echtzeit meint also nicht nur das enge Zeitraster von wenigen Millisekunden, das für eine schnelle Regelung des Schneidprozesses benötigt wird, sondern kann sich vielmehr auch auf einen Zeitraum in Sekundenbereich beziehen (z.B. im Bereich 1 - 5 Sekunden, vorzugsweise 1 bis 2 Sekunden). Echtzeit bedeutet also, dass die Schritte, insbesondere die Bereitstellung des Ergebnisses mit der Qualitätsschätzung mit einer Zeitverzögerung (in Abgleich mit dem Laserbearbeitungsprozess) von maximal wenigen Sekunden ausgeführt werden, sodass beispielsweise geeignete Maßnahmen zur Beeinflussung des Schneidprozesses ergriffen werden können, insbesondere eine automatische Schneidqualitätsoptimierung .

In einer bevorzugten Ausführungsform der Erfindung kann die erste Signalfolge und/oder die zweite Signalfolge eine optische Signalfolge sein oder umfassen. Die erste und/oder zweite Signalfolge kann mit demselben optischen Sensor, z.B. einer Kamera und/oder zumindest einer Fotodiode erfasst werden. Vorzugsweise wird die erste und/oder zweite Signalfolge in alternierender Form erfasst. Der Sensor, z.B. die Kamera nimmt also in einem ersten Zeitintervall die erste Signalfolge und in einem zweiten Zeitintervall die zweite Signalfolge auf. Das Muster für die Bestimmung der Alternation der Signalfolgenerfassung kann in einer Vorbereitungsphase definiert werden (z.B. immer abwechselnd, eben alternierend oder nach einem anderen Schema, z.B. zweimal erste Signalfolge und einmal zweite Signalfolge). Für weitere Details und Ausführungsbeispiele sei auf die PCT/EP2017/081901 der Anmelderin verwiesen. Damit können die unterschiedlichen erfassten Signale unterschiedlich gewichtet werden für die anschließende Qualitätsschätzungsberechnung. In dieser Ausführungsform der Erfindung ist das maschinelle Lernmodell auf die Verarbeitung von einzelnen Bildern ausgelegt (bildbasiert). Somit liegt bereits nach einem Bild/Frame ein Klassifikationsergebnis (mit der Bearbeitungsqualitätsschätzung) vor. Da die alternierend aufgenommenen Einzelbilder auch wieder zu (zwei) neuen Streams zusammengefügt werden können, kann das maschinelle Lernmodell insbesondere auch als "video-" bzw. "streambasiert" bezeichnet werden.

Alternative Ausführungsformen sehen neben der optischen Signalerfassung andere Signaltypenerfassungen vor, wie z.B. alternativ oder kumulativ zur optischen eine akustische Signalerfassung. Die Modelle werden entsprechend auch mit akustischen Trainingsdaten angelernt.

In einer weiteren, bevorzugten Ausführungsform der Erfindung ist das neuronale Netzwerk zur Implementierung eines maschinellen Lernmodells als ein Deep Learning Modell bzw. Deep Neural Network (DNN) mit entsprechenden Deep-Learning Algorithmen ausgebildet. Der Deep-Learning Algorithmus trainiert somit nicht nur den Klassifikator, sondern auch den Feature-Extraktor. Somit wird das maschinelle Lernmodell trainiert, um aus der erfassten ersten und zweiten Signalfolge automatisch und ohne eine vorangehende Analyse von Eigenschaften (bzw. Merkmalen/features - *feature extraction*) zu erkennen, welche Eigenschaften/Merkmale, insbesondere welche räumlichen und/oder zeitlichen Eigenschaften, der ersten und zweiten Signalfolge für die Schätzung der Bearbeitungsqualität relevant und zur Berechnung des Ergebnisses zu berücksichtigen sind. Dieser Ansatz implementiert damit einen feature-extraktor-freien (bzw. merkmalsfreien) Prozess. Dies bedeutet, dass ein sogenannter End-to-End Algorithmus umgesetzt werden kann. "End-to-end" meint in diesem Kontext, dass die Rohdaten, also die erfassten Signalfolgen, ohne wesentliche Vorverarbeitung und insbesondere ohne manuelle Bestimmung der Merkmale in den Signalfolgen, die anschließend mit einem Machine-Learning Algorithmus (im Folgenden auch kurz ML-Algorithmus genannt) zu einem Resultat weiterverarbeitet (z.B. klassifiziert) werden, verwendet werden können. "Ohne wesentliche Vorverarbeitung" meint in diesem Kontext abgesehen von einer marginalen Vorverarbeitung, wie z.B. einer Histogramm-Equalization, einer Bildtiefendreduktion und/oder einem ROI-Zuschnitt (ROI - Region of Interest). Insbesondere muss bei dem End-to-end Ansatz keine separate Vorverarbeitung der Rohdaten erfolgen, um die ,features' zu extrahieren, die zum Lernen wichtig sind. Im Gegensatz zu dem klassischen ML-Ansatz mit vorangehender Feature-Extraction wird bei der hier vorgestellten Lösung nicht nur der Klassifikator von einem Algorithmus trainiert, sondern vorzugsweise im gleichen Schritt ebenfalls der Feature Extractor. Das heißt, der Algorithmus berechnet bzw. lernt selbständig Repräsentationen aus den Inputdaten bzw. Rohdaten und damit auch die *"features".* Um diesen Zusammenhang zu erkennen, muss der Algorithmus selbständig die beste Repräsentation der Inputdaten finden, um diese zu klassifizieren. Die Tatsache, dass bei dem erfindungsgemäßen Verfahren keine Kennwerte ('features') extrahiert werden müssen, ist mehrfach vorteilhaft. Zum einen kann der Aufwand der Algorithmus-Entwicklung vereinfacht werden, da die wichtigen Features nicht erkannt, nicht bestimmt und nicht extrahiert werden müssen. Weiter ist vorteilhaft, dass mit der «Feature-freien» Algorithmus-Entwicklung die Gefahr nicht vorhanden ist, dass wichtigste Features, welche die meiste Information beinhalten würden, übersehen werden können. Letztlich steckt die wesentliche Information oft auch in sehr komplexen, überlagerten oder kaum fassbaren Signal-, Bild- bzw. Bildsequenzeigenschaften, was eine optimale Kennwertanalyse schwierig macht. Daher ist nicht erstaunlich, dass der hier umgesetzte Deep Learning Ansatz ohne eine Kennwertextraktion den Feature-Extraktor-basierten Ansätzen überlegen ist.

Als Lernalgorithmen werden vorzugsweise Lernalgorithmen des überwachten Lernens (supervised learning) mit gelabelten Datensätzen angewendet.

In einer weiteren bevorzugten Ausführungsform der Erfindung wird das Ergebnis mit der geschätzten Bearbeitungsqualität verwendet, um den Laserbearbeitungsprozess zu regeln. Dies hat den Vorteil, dass Ausschuß vermieden und die Qualitätsverbesserungsmaßnahmen schneller ausgeführt werden können. Zudem kann Material eingespart werden. Weitere Details sind dem Fachmann bekannt. In diesem Zusammenhang wird für weitere Details auf die EP3159093B1 der Anmelderin verwiesen. Bei detektierter Minderqualität bzw. vermuteten Schlechtschnitt (z.B. hohe Rauhigkeit/Grat, Abriss etc.) können automatisch Maschinenregelungssignale erzeugt werden. Diese Maschinenregelungssignale sind alle automatisch auf der Laserbearbeitungsanlage ausführbar und können unter anderem dazu ausgelegt sein, folgende Maßnahmen auszuführen:
- Düse reinigen und dann weiterbearbeiten, insbesondere schneiden,
- Düsen überprüfen (Zentrierung, Abnutzung), ggf. Düsenwechsel und dann weiterbearbeiten,
- Korrektur der Schneidparameter,
- Manuelle Korrektur der Schneidparameter, und Überprüfen, ob die Schneidqualität sich nach der Maßnahme verbessert,
- Automatische Korrektur der Schneidparameter, nach Zugriff auf ein trainiertes Modell.

In einer weiteren bevorzugten Ausführungsform der Erfindung erfolgt das Erfassen der ersten und zweiten Signalfolge jeweils synchronisiert, so dass eine Entwicklung über die Zeit des Bearbeitungsprozesses beobachtbar ist. Vorzugsweise können Zeitstempel für das Training des Modells verwendet werden, um eine örtliche Zuordnung der Signale zu den geschnittenen Konturen am Werkstück bereitstellen zu können. Die Zeitstempel werden jedoch nicht explizit für den Zugriff auf das trainierte Netz benötigt, da die Deep-Learning-Algorithmen darauf basieren, dass die Bildmatrix sowie die zeitlichen Abstände der Bilder/ Fotodiodensignale immer gleich sind. Für die Qualitätsschätzung mit dem trainierten Netz ist die Synchronizität insbesondere dann wichtig, wenn beide Streams gleichzeitig für die Schätzung verwendet werden sollen. Es sei an dieser Stelle jedoch angemerkt, dass für das Training des Modells eine örtliche Zuordnung der Signale zu den geschnittenen Konturen wichtig ist, da die Labels bzw. Merkmale der Schneidqualität örtlich dem Schneidprozess zugeordnet werden müssen. Dieses lässt sich über Zeitstempel lösen.

In einer weiteren bevorzugten Ausführungsform der Erfindung umfasst das Verfahren folgende Schritte:
- Bereitstellen von erfassten Fotodiodensignalen von zumindest einer Fotodiode;
- Zugreifen auf das trainierte neuronale Netzwerk und/oder auf ein weiteres trainiertes neuronales Netzwerk mit den erfassten Fotodiodensignalen, um das Ergebnis zur Schätzung der Bearbeitungsqualität zu berechnen. Gemäß einer vorteilhaften Ausführungsform der Erfindung kann das trainierte maschinelle Lernmodell und das weitere trainierte maschinelle Lernmodell identisch sein, so dass neben den Bildern der ersten und zweiten erfassten Signalfolge auch die Fotodiodensignale in ein und demselben Modell gerechnet werden.

In einer weiteren bevorzugten Ausführungsform der Erfindung kann die erfasste erste und zweite Signalfolge eine optische Signalfolge sein. Die erste optische Signalfolge unterscheidet sich in optischen Aufnahmeparametern von der zweiten optischen Signalfolge. So kann z.B. die erfasst erste Signalfolge eine Folge von Bildern mit Beleuchtung ist und die erfasste zweite Signalfolge eine Folge von Bildern ohne Beleuchtung sein. Zur Beleuchtung kann zumindest eine Leuchtquelle verwendet werden. Die Leuchtquelle kann als eine Leuchtdiode oder als Laser ausgebildet sein, die zur Emission von vorzugsweise schmalbandigem Beleuchtungslicht dient. Die Leuchtquelle kann im Bearbeitungskopf integriert sein oder sich extern am Bearbeitungskopf befinden.

In einer weiteren bevorzugten Ausführungsform der Erfindung kann die erfasste erste Signalfolge eine Folge von Bildern mit einer ersten Kameraeinstellung (z.B. einer ersten Blendeneinstellung/Tiefenschärfe, Bildebene, Belichtungszeit) und die erfasste zweite Signalfolge eine Folge von Bildern mit einer zweiten Kameraeinstellung sein (z.B. zweite Blendeneinstellung/Tiefenschärfe, Bildebene, Belichtungszeit). Aus den unterschiedlichen Datensätzen/Bildern kann eine bessere Qualitätsschätzung mittels des DNN erzielt werden. Der Begriff "Kameraeinstellung" umfasst auch Parameter und/oder bauliche Merkmale, die außerhalb der Kamera angeordnet sind, aber einen technischen Effekt bei den von der Kamera erfassten Bildern bewirken und deshalb hier als Kamera-bezogene Einstellung mit umfasst sein sollen, wie z.B. die Anordnung einer variable Blende außerhalb der Kamera (d.h. außerhalb Sensorchip und Objektiv).

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Recheneinheit oder auf ein Computerprogrammprodukt gerichtet sind) mit den Merkmalen weitergebildet sein, die in Zusammenhang mit dem Verfahren beschrieben und/oder beansprucht sind. Die entsprechenden funktionalen Merkmale des Verfahrens (z.B. Erfassen) werden dabei durch entsprechende gegenständliche Module (z.B. Datenschnittstelle zum Erfassen/Einlesen), insbesondere durch Hardware-Module oder Mikroprozessor-Module, des Systems bzw. des Produktes ausgebildet und umgekehrt.

In einem weiteren Aspekt bezieht sich die Erfindung auf eine Recheneinheit zur Prozessüberwachung eines Laserbearbeitungsprozesses einer Laserbearbeitungsmaschine zur Schätzung einer Bearbeitungsqualität, mit:
- Einer Datenschnittstelle zu zumindest einem Sensor, der während des Bearbeitungsprozesses zum Erfassen einer ersten Signalfolge mit einem ersten Merkmal und zum Erfassen einer zweiten Signalfolge mit einem zweiten Merkmal jeweils von der Bearbeitungszone bestimmt ist;
- Einer Verarbeitungsschnittstelle zu einem Speicher (der intern und/oder extern zu der Recheneinheit ausgebildet sein kann), in dem zumindest ein (trainiertes) neuronales Netzwerk gespeichert ist, auf das mit der erfassten ersten und zweiten Signalfolge zugegriffen wird, um ein Ergebnis zur Schätzung der Bearbeitungsqualität (z.B. ein Klassifizierungsergebnis) zu berechnen.

Vorzugsweise ist der Speicher mit dem maschinellen Lernmodell (auch kurz als 'Modell' bezeichnet), insbesondere mit dem DNN, in die Recheneinheit integriert. Dies hat den Vorteil, dass der Betreiber der Laserbearbeitungsanlage vor Ort und nach Inbetriebnahme unmittelbar die Qualitätsverbesserungsmaßnahmen durchführen kann. Dabei wird darauf hingewiesen, dass das Training des Modells in einer der Betriebsphase vorangehenden Trainingsphase auf einer externen Recheneinheit ausgeführt wird. Somit wird die Trainings- und Testphase des Modells auf einer externen und anderen Recheneinheit gerechnet und ausgeführt als die Anwendungsphase des Modells gerechnet und ausgeführt wird (bevorzugt lokal auf der Laserbearbeitungsanlage). In einer bevorzugten Ausführungsform der Erfindung ist die Recheneinheit auf der Laserbearbeitungsanlage ausgebildet.

In einer bevorzugten Ausführungsform der Laserbearbeitungsanlage kann der zumindest eine Sensor ein optischer Sensor sein. Der Sensor kann insbesondere eine Kamera umfassen oder als solche ausgebildet sein. Der Sensor kann fakultativ zumindest eine Fotodiode umfassen.

Vorzugsweise kann eine Achse des zumindest einen optischen Sensors koaxial zu einer Bearbeitungsachse eines Laserbearbeitungskopfes angeordnet sein. Die Achse des Sensors kann zumindest zwischen Schneiddüse und Werkstück parallel oder schräg zu der Bearbeitungsachse des Laserbearbeitungskopfes verlaufen. Insbesondere kann die Achse des Sensors in einem Winkelbereich zwischen 5° und 20° von der Laserbearbeitungsachse abweichen. Dies hat den Vorteil, dass andere Bildmerkmale vom Laserschnitt erfasst werden können. Insbesondere bringt dies einen erheblichen Vorteil bei der Beobachtung des Schneidprozesses von Stahl mit Sauerstoff (Laserbrennschneiden), wie aus der WO2016181359 A1 der Anmelderin hervorgeht. Aufgrund der hier flach verlaufenden Schneidfront wird der untere Teil der Schneidfront vom Schneiddüsenrand verdeckt, und in einer koaxialen Signalfolge ist ein Zurückbleiben von Schlackenrückstand nicht direkt detektierbar.

Um die unterschiedlichen Signalfolgen zu erfassen, ist die Laserbearbeitungsanlage vorzugsweise mit zumindest einer Leuchtquelle ausgebildet, die zur Beleuchtung der Prozesszone bei der Erfassung der ersten Signalfolge dient. Vorzugsweise ist die Leuchtquelle koaxial zur Bearbeitungsachse des Laserbearbeitungskopfes ausgebildet (ebenso wie der Sensor). Es ist jedoch in einer alternativen Ausführungsform der Erfindung auch möglich, die Leuchtquelle nicht koaxial anzuordnen, z.B. innerhalb oder außerhalb des Laserkopfes. Bevorzugt kann es auch sein, die zumindest eine Leuchtquelle und den zumindest einen Sensor außerhalb des Bearbeitungskopfes der Laserbearbeitungsanlage anzuordnen, insbesondere in räumlicher Nähe zu den Netzwerkschnittstellen des optischen Sensors und/oder zu Versorgungsschnittstellen. Der optische Sensor kann als CCD- bzw. CMOS Kamera oder CCD- bzw. CMOS-Chip ausgebildet sein, z.B. mit einer Bildtiefe von mindestens 8 Bit und idealerweise einer Framerate, die 100Hz übersteigt. In einer weiteren Abwandlung kann der im Bearbeitungslaser eingebaute Pilot-Laser der Laserbearbeitungsanlage zur Erzeugung der Beleuchtung dienen. In dieser Ausführungsform muss zudem die Beleuchtungsleistung des Pilotlasers, welcher typischerweise wenige mW Leistung aufweist (in der Regel weniger als 2 mW), auf einige 100 bis einige 1000 mW erhöht werden. Im Weiteren kann dazu ein dichroitischer Spiegel oder ein anderes Filterelement ausgebildet sein, der/das im Strahlengang des Laserlichts vor einem Werkstück angeordnet ist und für das Beleuchtungslicht annähernd 50% transmissiv und annähernd 50% reflektiv ist.

In einem weiteren Aspekt bezieht sich die Erfindung auf ein Computerprogrammprodukt mit Computerprogrammcode zur Durchführung aller Verfahrensschritte des vorstehend beschriebenen Verfahrens, wenn das Computerprogramm auf einem Computer ausgeführt wird. Eine weitere Aufgabenlösung sieht ein Computerprogramm vor, mit Computerprogrammcode zur Durchführung aller Verfahrensschritte des oben näher beschriebenen Verfahrens, wenn das Computerprogramm auf einem Computer ausgeführt wird. Dabei ist es auch möglich, dass das Computerprogramm auf einem von einem Computer lesbaren Medium gespeichert ist.

### Kurze Übersicht über die Figuren

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:
- Fig. 1: eine beispielhafte Ansicht einer Schnittkante mit sprungartiger Änderung der Schneidqualität;
- Fig. 2a, b: eine beispielhafte Darstellung einer Prozessbeobachtung mit Beleuchtung;
- Fig. 3 a, b: eine weitere, beispielhafte Darstellung einer Prozessbeobachtung ohne Beleuchtung;
- Fig. 4: eine weitere, beispielhafte Darstellung einer Prozessbeobachtung mit Beobachtung beleuchtet mit Bildebene auf Blechoberkante, Beobachtung unbeleuchtet Oberkante und Beobachtung unbeleuchtet auf Unterkante;
- Fig. 5: eine schematische Übersichtsdarstellung des Verfahrens zur Prozessüberwachung unter Verwendung eines Deep Neural Networks (DNN);
- Fig. 6: eine schematische seitliche Darstellung des Bearbeitungskopfes mit OFF-Axis Prozessbeleuchtung und koaxialer Kameraposition;
- Fig. 7: eine weitere schematische seitliche Darstellung des Bearbeitungskopfes mit koaxialer Prozessbeleuchtung und koaxialer Kameraanordnung;
- Fig. 8: eine weitere schematische seitliche Darstellung des Bearbeitungskopfes mit koaxialer Prozessbeleuchtung und koaxialer Kameraanordnung;
- Fig. 9a, b: eine weitere schematische seitliche Darstellung des Bearbeitungskopfes mit variabler Blende und Kamera-Fokussierlinse;
- Fig. 10a, b: eine schematische Darstellung zur Erläuterung der physikalischen Funktionsweise einer veränderlichen Schärfentiefe;
- Fig. 11a,b: eine weitere schematische seitliche Darstellung des Bearbeitungskopfes mit veränderlicher Beobachtungsebene;
- Fig. 12: ein Ablaufdiagramm eines Verfahrens zur Qualitätsschätzung gemäß einer bevorzugten Ausführungsform (durchgezogene Linien) und gemäß einer weiteren bevorzugten Ausführungsform der Erfindung (gestrichelte Linien);
- Fig. 13: eine Blockdiagrammdarstellung von Bauteilen eines Systems gemäß einer bevorzugten Ausführungsform der Erfindung.

### Detaillierte Beschreibung der Figuren

Die Erfindung dient zur Qualitätsschätzung eines Laserbearbeitungsprozesses, wie z.B. eines Schneidprozesses. Wichtige Qualitätsmerkmale sind grundsätzlich Grat (auch Bart genannt), Rauheit, Verrundung, Riefenneigung, Verschweißung, Schlacke etc. Ein «Nicht-Durchschneiden» bzw. sogenanntes Abreißen ist auch eine Schneidqualitätseinstufung, wobei diese die schlechteste Qualität bedeutet.

Die Erfindung ermöglicht es, aus beobachtbaren Messsignalen auf die Schneidqualität zu schließen. Die Wahl der geeigneten Sensoren zur Beobachtung sowie die Wahl der geeigneten neuronalen Netzwerke und der geeigneten Algorithmik ist zur optimalen Schneidqualitätsschätzung zentral. Nachfolgend wird gezeigt, dass geeignete Sensoren nebst den üblichen Fotodioden primär Kameraaufnahmen mit und ohne Beleuchtung beinhalten. Weiter wird vermerkt, dass das maschinelle Lernmodell, welche auf einem End-To-End-Ansatz basiert, insbesondere auf dem Deep Learning Ansatz, die besten Korrelationen zwischen den genannten messbaren Sensorsignalen und der interessierenden Schneidqualität zeigen.

Für die Messung der Signalfolgen wurde der Laserschneidkopf mit einer Videokamera ausgerüstet. Sie ist vorzugsweise koaxial zum Laserstrahl ausgerichtet und befindet sich hinter dem dichroitischen, für die Beleuchtung und Beobachtung durchlässigen Umlenkspiegel, der den Bearbeitungslaser auf das Werkstück lenkt. Ein solches Bauteil, welches je nach Wellenlänge transmissiv bzw. reflektiv ist, wird Dichroit genannt. Der Umlenkspiegel kann in bestimmten Anordnungen für die Beleuchtungswellenlänge halbdurchlässig sein. In anderen Anordnungen kann/soll er für die Beleuchtung ganz durchlässig sein. Hingegen ist der Umlenkspiegel für den Bearbeitungslaser stets zu nahezu 100% (>99%) reflektiv. In den meisten Versuchen wurde mit einer Kamera-Framerate von 300 Hz gearbeitet, wobei das Video in einen beleuchteten und unbeleuchteten Stream aufgeteilt wurde. Die Framerate pro Stream ist dann noch 150Hz. Bei einem beispielhaften nominalen Vorschub von 1800 mm/min (bzw. 30 mm/s) wird folglich pro Stream alle 0.2 mm ein Frame aufgenommen. Die Signalfolge von Frames kann in einer Vorverarbeitung reduziert werden, z.B. dass die Bilder noch 170 x 170 Pixel groß sind. Mit der im vorliegenden Beispiel vorhandenen Auflösung von 100 px / mm, zeigt ein Bild einen Beobachtungsbereich von 1.7 mm x 1.7 mm. Offensichtlich überlappen sich so im Normalfall die Bilder in jedem Stream deutlich.

Neben den vielen Vorteilen einer koaxialen Kameraanordnung (wie z.B. eine einfache, schneidrichtungsunabhängige Implementierung etc.) gibt es auch Nachteile der koaxialen Prozessbeobachtung. Da durch die Düsenöffnung hindurchgeschaut wird, ist die Beobachtung typischerweise auf den Düsendurchmesser eingeschränkt und das Winkelspektrum der erfassten Strahlung liegt meistens bei <5 deg. Eine steile Schneidfront, wie sie im Schmelzschneiden vorkommen kann, kann nur stark verkürzt beobachtet werden, wodurch Information zur Schneidfront verloren gehen mag. Weiter kann die Beobachtung der Riefenbildung an Seitenwänden ebenfalls durch die koaxiale Abbildung eingeschränkt sein. Auch die Beobachtung einer flachen Schneidfront, wie sie im Brennschneiden vorkommen mag, kann durch die koaxiale Beobachtung eingeschränkt sein. Eine flach verlaufende Schneidfront ist unter Umständen kaum vollständig durch die Düse sichtbar. Der hinterste/unterste Teil bleibt unsichtbar, obwohl dort bei schlechtem Prozesszustand Schlackenrückstand entsteht kann .

Die Schlackenbildung insb. beim Brennschneiden kann daher mit schrägem Blickwinkel etwas besser erkennbar sein, Diese schräge Ansicht wird auch als exzentrisch oder off-axis bezeichnet.

Um die genannten Nachteile der koaxialen Prozessbeobachtung zu eliminieren, wird daher oft die koaxiale Sensorik mit off-axis Sensoren ergänzt.

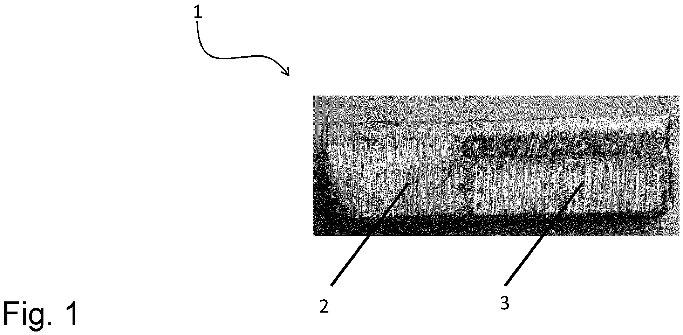

**Fig. 1** zeigt eine Schnittkante, die mit dem Bezugszeichen 1 gekennzeichnet ist, eines geschnittenen Werkstücks mit zwei beispielhaften Schneidqualitäten. Bei Position 2 war der Schnitt feiner als bei Position 3. Bei Position 3 entstand gar ein Plasmaschnitt.

Wie das Beispiel aus Fig. 1 zeigt, kann ein Schneidprozess umschlagen von gut auf genügend bzw. schlecht. Gründe hierzu sind vielfältig. So kann die Maschine verschleißen, verschmutzen oder die Werksstückbeschaffenheit mag variieren.
Umso nützlicher ist eine echtzeitige Überwachung der Schnittqualität, welche ermöglicht, dass reagiert werden kann, wenn diese mit dem hier beschriebenen Verfahren zur Prozessüberwachung als ungenügend erkannt bzw. klassifiziert wird.

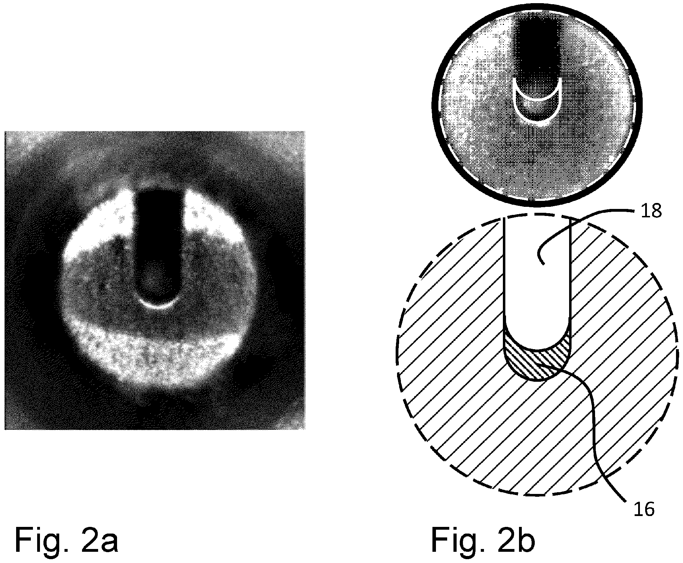

**Fig. 2a** **und b** zeigen Beispielbilder (Videoframes), die mit einer koaxial angeordneten Kamera und mit Beleuchtung erfasst wurden, hier in einem Schmelzschneidprozess. In der Darstellung in Fig. 2b ist die Schneidfront eingezeichnet, hier also nach unten verlaufend.
Beleuchtete Aufnahmen werden derart gemacht, dass eine (schmalbandige) Prozessbeleuchtung die Prozesszone beleuchtet, wobei diese im beobachteten Spektralbereich typischerweise heller ist, als das Eigenleuchten des Prozesses. Dadurch kann die Prozessumgebung, insbesondere die Schnittspaltgeometrie sehr gut sichtbar gemacht werden.

Die schematische Darstellung in Fig. 2b zeigt, wie durch einfache Bildverarbeitung der Schnittspalt 18 von der Blechoberfläche und von der noch schwach sichtbaren Schneidfront 16 extrahiert werden kann, was dem Stand der Technik entspricht. Gemäß vorliegender Erfindung erlernt aber das DNN selbst in den entsprechenden Feature-Layern oder Convolutional-Layern, ob und/oder wie der Schnittspalt extrahiert werden muss, um damit die Schätzung der Schneidqualität zu unterstützen.

Insbesondere in Fig. 2a kann die Schnittkantenrauheit im oberen Bereich erkannt werden. Auch hier erlernt das DNN selbständig die räumlichen Merkmale im Bild, welche mit der an den Testteilen gemessenen Rauheit korrelieren.

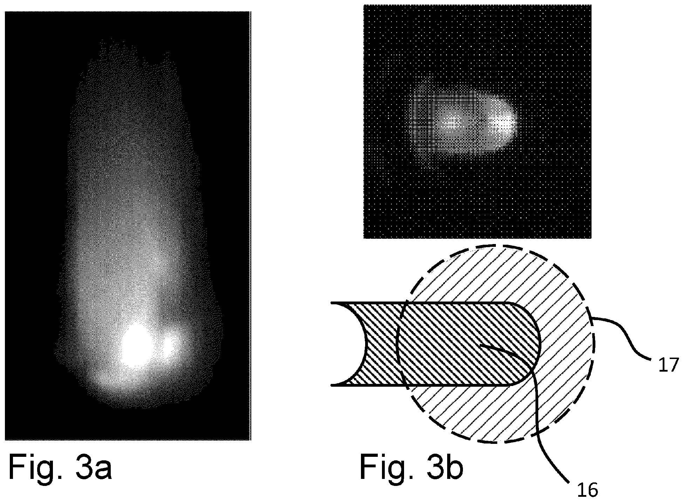

**Fig. 3a** **und b** zeigen weitere Beispielbilder, die mit einer koaxial angeordneten Kamera ohne Beleuchtung erfasst wurden. In der Darstellung in Fig. 3a ist ein Schmelzschneiden dargestellt. Fig. 3b zeigt einen Brennschnitt, wobei wieder die Schneidfront eingezeichnet ist. Auch die unbeleuchtete Kameraaufnahme ist wertvoll, bei welcher keine Beleuchtung der Prozesszone stattfindet. Vielmehr wird nur das Eigenleuchten des Prozesses beobachtet. Wird die Kameraverstärkung bzw. -belichtung sinnvoll eingestellt, so ist das Prozessleuchten trotz der eingebauten Schmalbandfilter gut beobachtbar. Figur 3b zeigt deutlich, dass beim Brennschneiden die Schmelzfront 16 sehr flach verlaufen und dessen Beobachtung durch die Düsenöffnung 17 begrenzt werden kann.

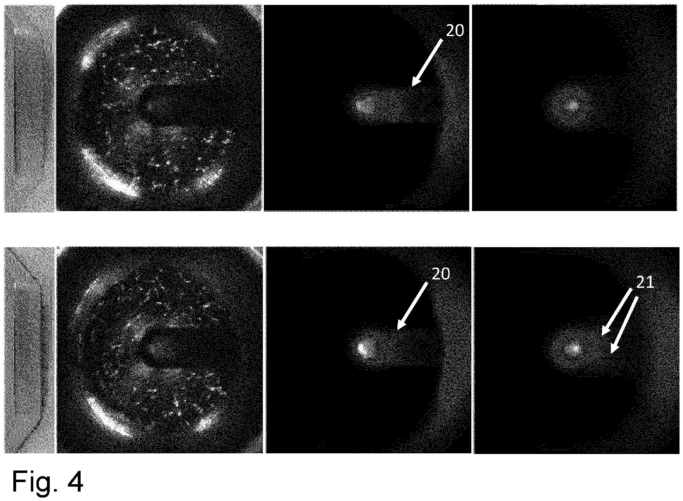

**Fig. 4** zeigt ein weiteres exemplarisches Beispiel eines Schmelzschneideprozesses. Zwei Schnitte sind gezeigt, die obere Zeile zeigt einen Schnitt mit wenig und die untere Zeile mit viel Grat. Die erste Spalte (ganz links) zeigt das geschnittene Teil mit sichtbaren Kanten. Die zweite Spalte zeigt beleuchte Einzelbilder und die Spalten drei und vier zeigen unbeleuchtete Bilder. Die Einzelbilder in Spalte 2 und 3 wurden mit einer ersten Kameraeinstellung gemacht, dass die Blechoberkante scharf abgebildet wird. Spalte 4 wurden mit einer zweiten Kameraeinstellung gemacht, dass die Blechunterkante scharf abgebildet wird.

Wie bereits zur Fig. 2a erwähnt, kann die Schnittkantenrauheit aus dem beleuchteten Bild (2. Spalte) erkannt werden. Die Schnittkantenrauheit kann jedoch auch aus unbeleuchteten Bildern mit Bildschärfe auf Blechoberkante (3. Spalte) gefunden werden. Sichtbare Prozessstrahlungsfluktuationen 20 aufgrund der Riefenbildung im Bereich der Oberkante kann erkannt werden. Auch hier erlernt das DNN selbständig die räumlichen Merkmale im Bild, welche mit der an den Testteilen gemessenen Rauheit korrelieren.

Allfälliger Grat ist insbesondere sichtbar in unbeleuchteten Bildern mit Bildschärfe auf der Blechunterkante (4. Spalte). Fluktuationen 21 der Prozessstrahlung kommt nun in dieser Beobachtungskonfiguration von der Blechunterkante und zeigt den Schmelzaustrieb. Dieser ist ein hydrodynamischer, turbulenter Prozess, welcher als stochastischer Prozess aufzufassen ist. Die Bildfolgen zeigen deshalb ein stochastisches d.h. fluktuierendes Auftreten von längsgezogenen Auskühlungszonen, die die Gratbildung anzeigen. Auch hier erlernt das DNN selbständig die räumlichen Merkmale in den Bildern und insbesondere bei Grat auch zeitliche Merkmale in den Bildsequenzen, welche mit der an den Testteilen gemessenen Grathöhe korrelieren.

Generell zeigt sich, dass die beiden Kameraaufnahmen, mit und ohne Beleuchtung, unterschiedliche, jedoch gleichermaßen wertvolle Informationen für die Qualitätsschätzung enthalten.

Aufnahmen mit Beleuchtung (Fig. 2) scheinen primär Informationen wie Schnittspaltbreite, Schnittspaltsymmetrie, Schneidfrontwinkel, Riefenstruktur, Schnittkantenrauheit, Prozessumgebende Werkstückstruktur, etc. zu enthalten. Aufnahmen ohne Beleuchtung (Fig. 3) scheinen hingegen primär Informationen wie Strahlungsschwerpunkt, Strahlungsfläche (mit Umfang, Zirkularität, Symmetrie), Strahlungsintensitätsverteilung, Strahlungskontrast, Schmelzfilmwellen, Schmelzaustriebszonen, Prozessstrahlungsfluktuationen etc. zu enthalten.

Zwecks Gewinnung maximaler Information werden beide Aufnahmen synchron verwendet. Da, zwecks Kosten- und Gewichtsoptimierung, nur eine Kamera koaxial zur Prozessbeobachtung vorhanden ist, wird bei der Beobachtung alternierend stets ein Frame beleuchtet und dann ein folgendes unbeleuchtet aufgenommen. Dabei muss auch die Beleuchtung mit der Kameraaufzeichnung (inkl. Kameraverstärkung und Kamerabelichtungszeit) synchronisiert sein. Somit ist es möglich, mit einer Kamera zwei unterschiedliche Video-Streams (einmal beleuchtet und einmal unbeleuchtet) zu erzeugen, welche synchron den Schneidprozess in Echtzeit beobachten.

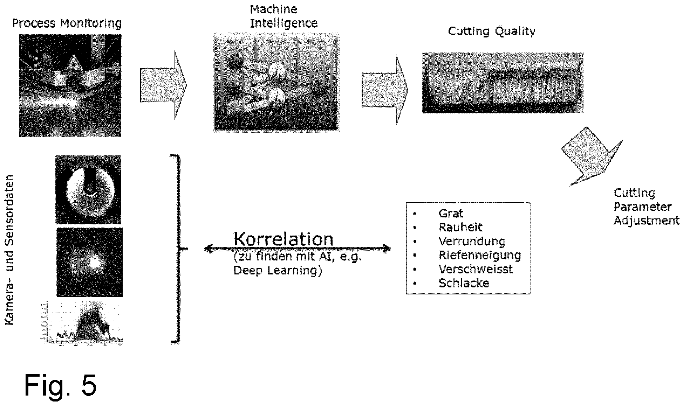

**Fig. 5** zeigt das System zur Prozessbeobachtung und Qualitätsberechnung. Während des Bearbeitungsprozesses werden mittels geeigneter Sensoren (insbesondere Kamera und/oder Fotodiode) Signalfolgen erfasst. Die Signalfolgen können in ihren Erfassungscharakteristiken variieren (z.B. mit oder ohne Beleuchtung aufgenommen sein). Diese auch als Rohdaten bezeichneten Signalfolgen werden einem trainierten Modell, insbesondere einem DNN zugeführt, das dazu ausgebildet ist, die Qualität auf Basis der Signalfolgen multifaktoriell zu schätzen. "Multifaktoriell" meint hier, dass die Qualitätsberechnung mehrere Faktoren umfasst, wie oben erwähnt, z.B. Grat, Schlackenbildung, Riefenneigung etc. Das Ergebnis mit der Qualitätsschätzung wird quasi in Echtzeit (mit einer Verzögerung, die auf die Berechnungszeit zurückzuführen ist und max. wenige Sekunden beträgt) und während der Laserbearbeitung bereitgestellt. Das Ergebnis kann zur Auslösung von Maßnahmen, wie Stopp und Restart des Schneidprozesses, Kontrolle von z.B. Schneiddüse, usw., verwendet werden. Weiter kann das Ergebnis zur Anpassung der Schneidparameter (automatische Schneidprozessoptimierung) verwendet werden. Das Ergebnis der Schneidqualitätsschätzung kann in einer vorteilhaften Weiterbildung der Erfindung auch in eine Schneidprozess-Regelung implementiert werden.

Fig. 5 zeigt das generelle Konzept der Erfindung dahingehend, dass mit ausgewählten Sensordaten (mindestens zwei Signalfolgen bzw. Kamerastreams sowie fakultativ Fotodiodendaten) mittels einer End-to-End Architektur eines maschinellen Lernsystems auf die Schneidqualität geschlossen werden kann. Der maschinelle Lernagent (Lernroboter) mit dem Lernmodell wird mit Trainingsdaten und einem Optimierungsalgorithmus trainiert und kann nach dem Training und Testen für die und/oder auf der Laserbearbeitungsmaschine betrieben bzw. angewendet werden. Ein wichtiger Vorteil von Deep Learning, insbesondere von einer End-to-End Lernarchitektur gegenüber traditionellen maschinellen Lernverfahren ist, dass keine Merkmalsanalysen und keine Kennwerte extrahiert werden müssen und der Lernagent bzw. das neuronale Netzwerk beim Trainieren selbst erkennt, auf was zu achten ist, um maximale Korrelation zu finden. Das heißt, das rechner-basierte Deep-Learning-System kann aus den Bildern und Videos selbst erkennen, welche Bild- und/oder Videomerkmale für die Schneidqualitätserkennung relevant sind. Sind genügend Daten zum Trainieren vorhanden, was hier zutrifft, sind Deep Learning Ansätze den traditionellen Machine-Learning-Ansätzen (mit feature extraction) überlegen.

Nach Abschluss der Lern- und Test und ggf. einer Validierungsphase kann das DNN angewendet werden, um zu einer ersten und zweiten erfassten Signal- oder Bildfolge ein Klassifikationsergebnis bereitzustellen. Das Klassifikationsergebnis (auch Ergebnis genannt) umfasst die vorstehend genannten Qualitätsklassen, also insbesondere "vorhandene(r) / nicht vorhandene(r) Grat / Schlackenbildung / Riefenneigung / ...".

Nach der Trainingsphase kann das maschinelle Lernmodell quasi in Echtzeit die Schneidqualität aus den beobachtbaren Signalfolgen bzw. Sensordaten schätzen.

Weiter wird eine Prozessregelung ermöglicht, wobei Schneidparameter automatisch angepasst werden, um die Schneidqualität zu optimieren, wenn diese als ungenügend klassifiziert worden ist. Wird also festgestellt, dass die Schneidqualität vom gewollten Sollwert abweicht oder abdriftet, können in typischerweise festgelegter Reihenfolge die verschiedenen Schneidparameter adaptiert werden, um zur gewollten Schneidqualität zurückzukehren. Die wesentlichen Schneidparameter sind Düseneigenschaften wie Zentriertheit und Abnutzung, Fokuslage des Arbeitsstrahles, Gasdruck, Leistung des Arbeitsstrahles und Vorschub der Bearbeitung. Diese Größen sind alle automatisch auf der Laserbearbeitungsanlage adaptierbar. So können folgende Schritte zur Regelung der Schneidqualität automatisch ausgeführt werden:
- Düseneigenschaften prüfen und dann Weiterschneiden, was folgende Schritte beinhalten kann
   ∘ Düse reinigen,
   ∘ Zentrierung der Düsenöffnung zum Arbeitslaser prüfen und ggf. korrigieren
   ∘ Düsentyp prüfen und ggf. korrigieren, d.h. Düse ersetzen
   ∘ Abnutzung der Düse prüfen und ggf. mit neuer Düse ersetzen
   ∘ dann weiterbearbeiten, insbesondere schneiden,
- Korrektur der Fokuslage während dem Schneiden. Haben obige Maßnahmen noch zu keiner Qualitätsverbesserung geführt, so kann die Fokuslage korrigiert werden. Erfahrungsgemäß wird durch thermische Erwärmung der Schneidkopf-Optik die Fokuslage nach oben (bei transmissiven Elementen) gezogen, weshalb die Fokuslage nach unten korrigiert/geregelt werden soll. Sollte sich daraufhin die Schneidqualität jedoch gar verschlechtern, soll unmittelbar in die Gegenrichtung korrigiert werden. Es wird so lange korrigiert, bis die Schneidqualität wieder dem gewollten Sollwert entspricht.
- Korrektur des Gasdruckes während dem Schneiden. Haben obige Maßnahmen noch zu keiner Qualitätsverbesserung geführt, so kann der Gasdruck korrigiert werden. Erhöhen des Gasdruckes kann insbesondere die Gratbildung minimieren. Sollte sich darauf die Schneidqualität jedoch gar verschlechtern, soll unmittelbar in die Gegenrichtung korrigiert werden. Es wird so lange korrigiert, bis die Schneidqualität wieder dem gewollten Sollwert entspricht.
- Korrektur der Leistung während dem Schneiden. Haben obige Maßnahmen noch zu keiner Qualitätsverbesserung geführt, so kann die Leistung korrigiert werden. Liegt zu wenig Leistung an, z.B. wegen Degeneration des Lasers, kann die Leistung erhöht werden. Sollte sich darauf die Schneidqualität jedoch gar verschlechtern, soll unmittelbar in die Gegenrichtung korrigiert werden. Es wird so lange korrigiert, bis die Schneidqualität wieder dem gewollten Sollwert entspricht.
- Korrektur des Vorschubes. Haben obige Maßnahmen noch zu keiner Qualitätsverbesserung geführt, so kann der Vorschub adaptiert werden. Dies kann nötig werden, wenn beispielsweise die Werkstoffqualität nachteilig verändert wurde, aufgrund von z.B. Rost, Schmutz, Öl, etc. auf der Werkstoffoberfläche. Weiter ist auch möglich, dass sich die Systemeigenschaften der Maschine verschlechterten, z.B. durch Verschmutzen der Schneidkopfoptiken, weshalb eine Vorschubreduzierung zwecks Schneidqualitätssteigerung helfen mag. Sollte sich darauf die Schneidqualität jedoch gar verschlechtern, soll unmittelbar in die Gegenrichtung korrigiert werden. Es wird so lange korrigiert, bis die Schneidqualität wieder dem gewollten Sollwert entspricht.
- Hilft selbst die Vorschubkorrektur nicht, die Schneidqualität zu verbessern, kann es sein, dass das Bearbeitungssystem derart stark degradiert ist, z.B. durch stark verschmutzte oder beschädigte Optik, dass durch die Optimierung der Schneidparameter keine Verbesserung der Schneidqualität erbracht werden kann. In diesem Fall kann die Maschine gestoppt und den Bediener benachrichtigt werden.

Die oben erklärten Regelstrategien sind beispielhaft und nicht die einzig Möglichen. Auch denkbar ist, dass das neuronale Netzwerk neben der Feststellung einer abweichenden Qualität auch miterkennt, welcher spezifischen Schneidparameter der hauptsächliche Grund dafür sein mag. Denn je nach Fehlstellung eines bestimmten Schneidparameters mag das Qualitätsfehlerbild anders ausschauen. Entsprechend wird primär der vermutete fehlerhafte Schneidparameter korrigiert.

In einer weiteren alternativen Regelstrategie wird zusätzlich ein theoretisches physikalisches Schneidmodell eingesetzt, welches die Schneidparameterkorrektur unterstützen kann, indem verschiedene Grössen wie Schnittspaltbreite, Schmelzfilmdicke, etc., welche im theoretischen Modell enthalten sind, durch die Prozessbeobachtung erfasst werden können. Somit ist dem physikalischen Modell der aktuelle Zustand des Schneidprozesses schätzungsweise bekannt, wodurch auf eine Fehlstellung eines Schneidparameters geschlossen werden kann. Entsprechend wird primär der vermutete fehlerhafte Schneidparameter korrigiert. Sämtliche oben erläuterte Regelstrategien sind beispielhaft und nicht abschliessend.

In einer bevorzugten Ausführungsform der Erfindung kann als neuronales Netzwerk ein deep neural network DNN und vorzugsweise ein convolutional neural network CNN eingesetzt werden, das ein Bild der Signalfolge und/oder ein Fotodiodensignal der Signalfolge und/oder weitere Signale als Eingabe an das Input Layer weitergibt. Gemäß einer vorteilhaften Architektur des CNN kann das Netzwerk aus einer Kaskadierung von unterschiedlichen Layern (Schichten), insbesondere einem convolutional layer (CONV), gefolgt von einem Aktivierungslayer (ACT), gefolgt von einem Pooling layer (POOL). Diese Abfolge (CONV, ACT, POOL) kann mehrfach kaskadiert werden bevor ein oder mehrere fully connected layer (s) und ein output layer verschaltet sind. Das output layer ist dazu bestimmt, ein Klassifikationsergebnis in Form von geschätzten Qualitätsklassen zu dem jeweiligen Input auszugeben. Das convolutional layer kann als linearer Filter ausgebildet sein, der ein gefiltertes Bild (feature map) berechnet, so dass die Gewichte nur für den Filter und nicht für jedes Pixel berechnet werden müssen. Der Pooling Layer (maxpooling oder averagepooling) dient zur Dimensionsreduktion, was durch ein Subsampling erreicht werden kann. Wie vorstehend beschrieben, können somit am Ausgang des CNN die automatisch berechneten Features/Merkmale bereitgestellt werden. Diese features können mit dem fully connected layer oder mehreren in Folge geschalteten fully connected layers auf die Zielklassen klassifiziert werden. Der Output Layer kann als Activation layer mit einer Softmax Aktivierungsfunktion ausgebildet sein.

Die Deep Learning Algorithmen sind daten- und rechenintensiv und werden deshalb vorzugsweise auf einer Grafikkarte (graphics processing unit / GPU) oder einer tensor processing unit (TPU) oder Netzwerken aus Prozessoren gerechnet. Jede Schicht (layer) des neuronalen Netzwerkes kann auf leistungsstarken massiv-parallelisierbaren Prozessoren, insbesondere multi-core- oder many-core-Prozessoren, gerechnet werden. Die Recheneinheit ist vorzugsweise als Grafikkarte oder den anderen vorstehend erwähnten Hardwaremodulen ausgebildet oder umfasst eine solche.

Vorzugsweise kann die Recheneinheit eine Benutzerschnittstelle (z.B. GUI) umfassen, die dazu bestimmt ist, das Ergebnis der Prozessüberwachung während des Bearbeitungsprozesses anzuzeigen.

Die Deep Learning Algorithmen können in Python oder einer anderen Hochsprache, wie C++ oder CUDA implementiert sein. Als DNN Architekturen können mitunter z.B. einfache CNN, Residual Nets oder Wide Residual Nets verwendet werden.

Um dem sog. Overfitting entgegenzuwirken, kann vorzugsweise ein early stopping Verfahren beim Training angewendet werden, bei dem das Training gestoppt wird, sobald der Fehler des Validierungssets wieder ansteigt.

In Versuchen hat sich gezeigt, dass es sich als besonders vorteilhaft für eine Qualitätsklassifikation erweist, wenn die erfassten Signalfolgen tatsächlich eine Entwicklung über die Zeit und somit zeit-abhängige Merkmale repräsentieren.
Um in diesem Fall die Signalfolge im DNN abbilden und somit zeit-abhängige Merkmale lernen zu können, können in Kombination mit dem CNN insbesondere sog. Gated Recurrent Units (GRU) oder Long Short Term Memory Netze (LSTM) angewendet werden.

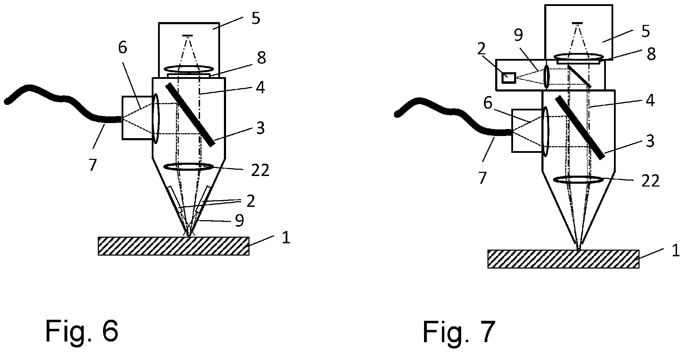

In den Figuren 6 - 8 ist skizziert, wie ein Schneidkopf mit der benötigten Sensorik aufgebaut sein kann. Die bevorzugte Variante entspricht Figur 7.

**Figur 6** zeigt eine erste mögliche Variante. Der Bearbeitungsstrahl 6 kommt vom Laser via Transportfaser 7, in den Bearbeitungskopf, wobei dort der Laserstrahl von einem dichroitischen Spiegel 3 auf das Werkstück 1 gelenkt wird, um dort das Werkstück zu bearbeiten. Am Bearbeitungskopf sind Leuchtquellen 2 angebracht, welche mit schmalbandigem Beleuchtungslicht 9 die Prozesszone beleuchten. Es werden dazu z.B. Leuchtdioden (LED) oder Laser benutzt.

Die Kamera 5 beobachtet die Prozesszone, wobei vor der Kamera ein schmalbandiges Filter 8 angebracht wird, welches nur das Lichtspektrum der Beleuchtung durchlässt und alle anderen Wellenlängen unterdrückt. Dadurch wird die Detektion des Prozess-Eigenleuchtens sowie des Bearbeitungslaserstrahles stark unterdrückt und ermöglicht die verbesserte Beobachtung der Beleuchtungslaserreflexionen am Werkstück. Diese ist insbesondere in der Umgebung des Schnittspaltes von Interesse und typischerweise gut sichtbar. Der dichroitische Spiegel 3 ist so ausgestaltet, dass er für das beobachtete Licht 4 durchlässig ist. Die Leuchtquellen können innerhalb des Schneidkopfes, wie in FIG. 6 dargestellt, angebracht sein.

Als weitere Ausführungsform ist auch diejenige aus **Figur 7** vorstellbar. Hier wird die Beleuchtung 2 in der Nähe des Kamerablocks 5 koaxial in den Beobachtungsstrahlengang eingekoppelt.

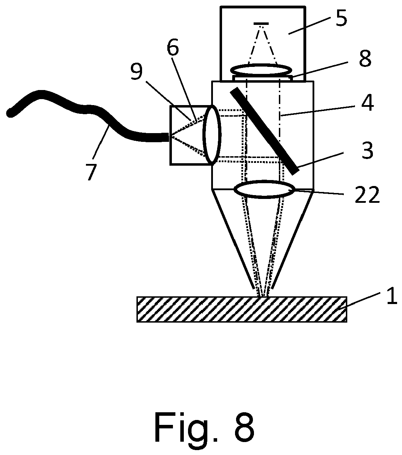

Eine weitere mögliche Ausführungsform zeigt **Figur 8****.** Hier wird das Beleuchtungslicht 9 im Arbeitslaser erzeugt und wird über die Transportfaser zum Schneidkopf transportiert. Diese Ausführungsform bedingt, dass der dichroitische Spiegel 3 idealerweise für das Beleuchtungslicht 50% transmissiv und 50% reflektiv ausgestaltet ist. Diese Ausführungsform ist insofern vorteilhaft, da die Beleuchtung entfernt vom Kopf generiert wird und den Kopf einfach belässt.

Den Ansatz, mit einer koaxialen Kamera mehrere unterschiedliche Aufnahmen zu machen und diese in verschiedenen Signalfolgen (Streams) zu fassen, kann noch weitergedacht werden. Nebst (alternierenden) Aufnahmen mit und ohne Beleuchtung sind weitere veränderbare Einstellungen denk- und umsetzbar, welche den Informationsgehalt der Prozessbeobachtung steigern können.

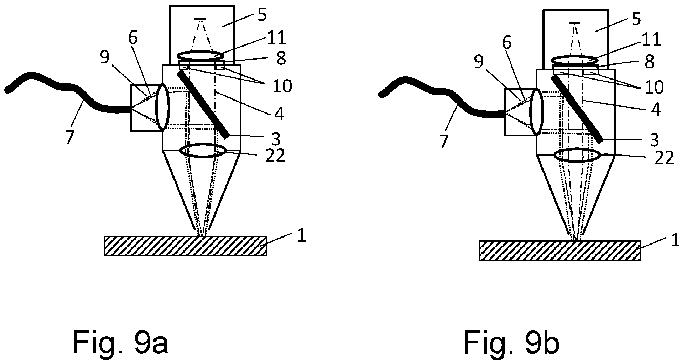

Weiter variierbar ist die Beobachtungstiefe, d.h. Schärfentiefe der Prozessbeobachtung. Die Schärfentiefe (häufig synonym auch Tiefenschärfe genannt) ist ein Maß für die Ausdehnung des scharfen Bereichs im beobachteten Objektraum. In einem abbildenden optischen System kann die veränderbare Tiefenschärfe durch Einbringen einer variierbaren Blende bewerkstelligt werden. **Figur 9** zeigt exemplarisch den Schneidkopf aus Figur 8 mit variierbarer Blende 10. In Fig. 9 a und b ist die Blende groß bzw. klein eingestellt. Gleichermaßen ist eine Blende auch in anderen Schneidköpfen (Fig. 6,7) einbaubar.

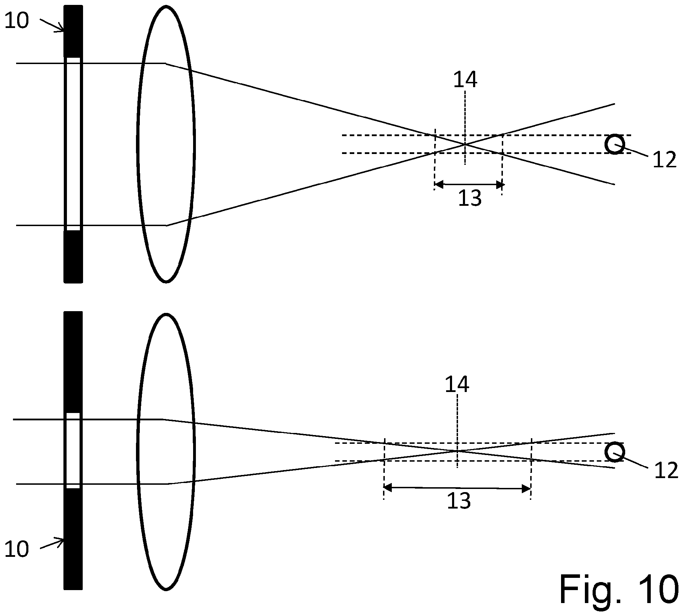

**Figur 10** erklärt den Effekt einer Blende 10 mit variierbarer Lichtdurchlass-Öffnung zwecks Veränderung der Tiefenschärfe 13. In der geometrischen Optik werden nur Bildpunkte auf exakt der Bildebene 14 scharf abgebildet. Mit zunehmender Entfernung von der Bildebene wird aus jedem scharf abgebildetem Bildpunkt ein immer größeres unscharfes Scheibchen. Dieses Scheibchen wird als Unschärfekreis 12 bezeichnet. Der Übergang vom Punkt zu Scheibchen ist fließend, und irgendwo dazwischen befindet sich die Grenze zwischen dem was noch als scharf und dem was schon als unscharf wahrgenommen wird. Wie groß dieser Bereich (d.h. die Tiefenschärfe) ist, hängt vom Winkel des Lichtkegels und somit von der Blendenöffnung ab. Ist die Blendenöffnung groß, resultiert ein kleiner Tiefenschärfe-Bereich und vice versa für eine kleine Blendenöffnung.

Je nach Bearbeitungsprozess und interessierender Prozesscharakteristik kann eine große oder eine kleine Tiefenschärfe für die Prozessbeobachtung vorteilhaft sein. Beispielhaft und nicht abschließend sind hier Beispiele dazu angefügt. So kann mit kleiner Tiefenschärfe die Werkstückkantenrauheit genauer auf bestimmten Höhen der Werkstückdicke festgestellt werden. Hingegen kann mit großer Tiefenschärfe eher eine gemittelte Rauheit über eine große Werkstückdicke eruiert werden. Für die Beobachtung der Schmelzflussfluktuationen des aufgeschmolzenen Metalls kann sowohl eine kleine wie (z.B. alternierend) eine große Tiefenschärfe vorteilhaft sein.

Bei der Prozessbeobachtung können alternierend Bilder mit unterschiedlicher Tiefenschärfe aufgenommen werden, um damit den Bearbeitungsprozess möglichst umfassend zu beschreiben und maximale Information darüber zu gewinnen.

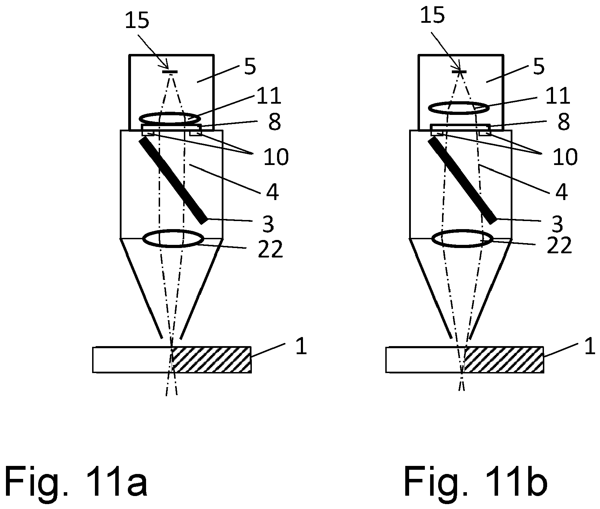

Eine weitere variierbare Einstellung im abbildenden System ist die Platzierung der Beobachtungs- bzw. Bildebene 14 entlang der Beobachtungsrichtung. Je nach Einstellung der Kamera-Fokussierlinse 11, vgl. Figur 11, liegt diese Bildebene an einem anderen Ort. **Figur 11** zeigt, dass sich bei kürzerem Abstand der Fokussierlinse 11 (die mit dem Bezugszeichen 11 bezeichnete Linse, betrifft diejenige der Kamera und mit dem Bezugszeichen 22 ist die Fokussierlinse des Lasers bezeichnet) zum Kamerasensor 15 (Kamerachip, CMOS- oder CCD-Chip) die Beobachtungs- bzw. die Bildebene nach unten verschiebt. In Fig. 11 a und b ist der Abstand der Fokussierlinse 11 zu Kamerachip 15 groß bzw. klein eingestellt. Die unterschiedliche Einstellung bewirkt, dass die Bildebene beispielhaft von der Werkstückoberkante (Fig. 11 a) zur Werkstückunterkante (Fig. 11 b) verschiebt. Besonders interessant ist das Verschieben der Bildebene, wenn die Schärfentiefe klein gewählt wird. Denn so kann gezielt eine Ebene in der Schnittfuge, z.B. die Ober- oder Unterkante der Fuge, beobachtet werden. Es sei bemerkt, dass statt dem Verschieben der Kameralinse auch anderweitig die Brennweite einer Optik verändert werden kann. Anstelle von festen (z.B. gläsernen) Linsen sind zunehmend fluide Linsen in Gebrauch. Solche Flüssiglinsen können meist sehr schnell (bis zu mehreren kHz) die Brennweite verändern. Einige funktionieren, indem eine Spannung an leitfähigen Flüssigkeiten angebracht wird, welche ihre Oberflächenform mit der angelegten Spannung verändern. Andere funktionieren ähnlich wie das menschliche Auge, indem eine flüssigkeitsgefüllte, elastische Linse zwecks Fokussieränderung mechanisch verformt wird.

Je nach Bearbeitungsprozess und interessierender Prozesscharakteristik kann eine unterschiedliche Beobachtungsebene für die Prozessbeobachtung vorteilhaft sein. Beispielhaft und nicht abschließend sind hier Beispiele dazu angefügt. Eine Beobachtungsebene an der Oberkante kann besonders geeignet sein, wenn die Schmelzwellen-Anfachung beobachtet werden will. Auch Riefenbildung an der Oberkante kann so speziell gut beobachtet werden. Andererseits ist die Platzierung der Beobachtungsebene an der Unterkante vorteilhaft, wenn die Gratbildung oder die Schmelzsowie Schlacke-Anhaftung beobachtet werden will. Es sei erwähnt, dass Figur 4 die unterschiedlichen Beobachtungsmöglichkeiten je nach gewählter Bildebene gut aufgezeigt hat.

Eine weitere variierbare Einstellung im abbildenden System ist die Belichtungszeit der Kamera. Auch die Belichtungszeit einer Kamera kann meist sehr schnell - vergleichbar mit der Samplingrate der Kamera - verändert werden. Die Aufnahme eines Gegenstandes mit Bildern mit unterschiedlicher Belichtungszeit ist daher interessant, da diese unterschiedlichen Bilder mittels eines High Dynamic Range -Verfahren (HDR-Verfahren) miteinander verrechnet werden können, um damit ein Bild mit erhöhtem Kontrast bereitzustellen.

Bei der Prozessbeobachtung können alternierend Bilder mit unterschiedlicher Belichtungszeit aufgenommen werden, wobei benachbarte Bilder mit einem HDR-Verfahren verrechnet und im Kontrast und somit im Informationsgehalt gesteigert werden können. Alternativ können die Aufnahmen unterschiedlicher Belichtungszeit entsprechend dem End-To-End-Ansatz direkt dem Deep-Learning-Algorithmus zugeführt werden. Dies ist insbesondere dann notwendig, wenn der Aufnahmeort zwischen dem ersten und zweiten Bild aufgrund einer hohen Vorschubgeschwindigkeit des Lasers deutlich auseinanderliegt. Damit kann der Bearbeitungsprozess möglichst umfassend beschrieben und maximale Information darüber gewonnen werden.

Somit kann die Aufnahme eines Einzelbildes (erste oder zweite Signalfolge) mannigfaltig verändert werden. Insbesondere können folgende Kameraeinstellungen verändert werden und die so erfassten Signalfolgen können dem DNN als Input zugeführt werden:
1) Beleuchtung,
2) Tiefenschärfe / Blendeneinstellung,
3) Bildebene und/oder
4) Belichtungszeit.
Die erste Signalfolge kann somit eine Bildfolge mit Beleuchtung und die zweite Signalfolge eine Bildfolge ohne Beleuchtung sein. Die erste Signalfolge kann auch eine Bildfolge mit einer ersten Blendeneinstellung und die zweite Signalfolge eine Bildfolge mit einer zweiten Blendeneinstellung sein. Die erste Signalfolge kann auch eine Bildfolge mit einer ersten Bildebene und die zweite Signalfolge eine Bildfolge mit einer zweiten Bildebene sein. Die erste Signalfolge kann auch eine Bildfolge mit einer ersten Belichtungszeit und die zweite Signalfolge eine Bildfolge mit einer zweiten Belichtungszeit sein.

Werden alternierend verschiedene Videostreams aufgenommen, können in den jeweiligen Signalfolgen (Streams) z.B. nur eine Größe verändert sein (z.B. die Beleuchtung) oder auch mehrere Größen zusammen. Eine interessante Kombination könnten folgende Streams sein
- Stream 1: beleuchtete Bilder mit Bildebene auf Werkstückoberkante
- Stream 2: unbeleuchtete Bilder mit Bildebene auf Werkstückunterkante
Idealerweise werden die Einzelbilder von Stream 1 und Stream 2 alternierend aufgenommen und können in der Weiterverarbeitung als synchron betrachtet werden.

Denkbar sind auch andere Kombinationen aus oben erwähnten, veränderbaren Größen. Auch denkbar ist z.B., mehr als 2 unterschiedliche Signalfolgen/Streams aufzunehmen. Statt der oben bemerkten zwei Streams könnten auch folgende Streams interessant sein
- Stream 1: beleuchtete Bilder mit Bildebene auf Werkstückoberkante
- Stream 2: unbeleuchtete Bilder mit Bildebene auf Werkstückoberkante
- Stream 3: unbeleuchtete Bilder mit Bildebene auf Werkstückunterkante
Idealerweise werden die Einzelbilder von Stream 1, Stream 2 und Stream 3 in Folge aufgenommen und können in der Weiterverarbeitung als nahezu synchron betrachtet werden.

Eine Vielzahl an weiteren Beispielen an möglichen Kombinationen von Einstellungen sind denkbar. Wird angenommen, dass die vier Einstellgrößen mit zwei Einstellungen verändert werden, so sind 2^4 = 16 unterschiedliche Einzelbilder generierbar. Wie viele Streams sowie welche Kombinationen an Einstellgrößen am Geeignetsten sind, ist offen.

Wie oben bereits erwähnt, ist es möglich, dass nebst der oben diskutierten Kamerabeobachtung auch Fotodioden zwecks zusätzlicher Prozessbeobachtung eingesetzt werden können. Diese sind in Schneidsystemen zumeist traditionell vorhanden, leicht zu kontrollieren, platzsparend zu verbauen sowie kostengünstig. Zudem haben sie den Vorteil, dass ihre Sampling-Rate deutlich höher ist als diejenige von Kameras. Somit können Sie weitere zusätzliche Informationen liefern. Möglich sind insbesondere koaxial angeordnete Fotodioden sowie solche im Schneidkopf-Düsenbereich, welche schräg auf den Prozess schauen.

Sind Videoaufnahmen sowie optional Fotodiodensignale vorhanden, kann mittels des neuronalen Netzwerks (insbesondere DNN, insbesondere CNN) und diesbezüglichen maschinellen Lernalgorithmen auf die Schneidqualität geschlossen werden. Vorzugsweise wird dazu ein End-To-End-Algorithmus als ein Algorithmus zum Training eines neuronalen Netzwerks, vorzugsweise ein Deep Learning Algorithmus, eingesetzt.

Ein End-to-End-Algorithmus ermöglicht das Training eines komplexen Lernsystems, das durch ein einziges Modell repräsentiert wird, das das komplette Zielsystem darstellt. Dadurch muss kein problemspezifisches Wissen in die Modell-Architektur einfließen, was ein umfassendes datengetriebenes Lernen ermöglicht. Voraussetzung dazu ist, dass für das Training genügend Daten vorhanden sind. Zudem müssen die Daten zumindest teilweise gelabelt sein, d.h. zu den Rohdaten müssen Labels zur Verfügung stehen (supervised learning).

Als Modelle im End-to-End-Ansatz werden vorzugsweise tiefe neuronale Netzwerke (deep neural networks/DNN) verwendet, welche mit zumindest einem Deep-Learning-Algorithmus trainiert werden. Deep Learning bezeichnet eine Klasse von Optimierungsmethoden künstlicher neuronaler Netze, die zahlreiche Zwischenlagen zwischen Eingabeschicht und Ausgabeschicht haben (tiefe Netze) und dadurch eine umfangreiche innere Struktur aufweisen, um komplexe Aufgaben zu lösen. In Erweiterung der Lernalgorithmen für Netzstrukturen mit sehr wenigen oder keinen Zwischenlagen (sog. flache Netze, shallow nets), wie beim einlagigen Perzeptron, ermöglichen die Methoden des Deep Learnings auch bei zahlreichen Zwischenlagen einen stabilen Lernerfolg. Die vielen Zwischenlagen ermöglichen das schrittweise Abstrahieren hochdimensionaler Eingangsdaten, was sich insbesondere für Bilder und Bildfolgen eignet, ohne dass die Extraktion von Kennwerten (Bildfeatures) vordefiniert werden muss. Es existiert eine Vielzahl von Netzstrukturen, wovon für die vorliegende Aufgabenstellung mit Kamerabildern vorzugsweise Convolutional Neural Networks (CNN) und Residual Neural Networks (RNN) verwendet werden. Für Bildfolgen oder zeitliche Signale müssen auch zeitliche Zusammenhänge resp. zeitliche Features erlernt werden können. Dazu eignen sich Gated Recurrent Unit (GRU) und Long Short Term Memory (LSTM) Netze. Vorteilhaft ist die Verwendung eines kombinierten Netzes, welches o.g. Netzstrukturen in unterschiedlichen Layern zusammenfasst.

Damit die Schneidqualität in Echtzeit während dem Schneiden geschätzt werden kann, muss das Modell initial mit vielen Daten trainiert werden. Dazu werden viele Schneidkonturen resp. Teile unterschiedlicher Schneidqualität erzeugt und sämtliche Sensordaten gespeichert. Typischerweise umfasst ein Datenset jeweils für einen Materialtyp (z.B. Metalllegierung) und eine Blechdicke mindestens 50 oder auch deutlich mehr Testteile, geschnitten mit unterschiedlichsten Einstellungen der Schneidparameter (wie Laserleistung, Fokuslage, Gasdruck, Vorschub) und unter Variation von diversen äußeren Einflussfaktoren (z.B. Materialqualität, Oberflächenqualität, Materialtemperatur, Verschmutzung Laserschutzglas). Anschließend werden die Schneidqualitätsmerkmale der Schneidkonturen ermittelt. Vorzugsweise werden die Merkmale mit z.B. einem Oberflächenmessgerät örtlich aufgelöst auf der ganzen Schneidkontur gemessen. Alternativ kann die Schneidqualität auch durch Experten beurteilt und die Datensätze können entsprechend gelabelt werden. Schneidqualitätskriterien wurden oben bereits erwähnt, vorrangig sind dies Grathöhe, Schlackenrückstand und Schnittkantenrauheit. Weiter ist es möglich, anstelle der ermittelten Qualitätsmerkmale direkt die 3D-Punktwolken der gemessenen Schnittflächen für das Training zu verwenden.

Wie vorstehend beschrieben, werden zum Training vorzugsweise Deep Learning Algorithmen (z.B. im einfachen Fall ein Stochastic Gradient Descent Algorithmus) angewendet, um anhand der gelabelten Trainingsdaten, die Netzwerkparameter in den jeweiligen Layers zu bestimmen. Die Aufgabe des jeweiligen Lernalgorithmus ist es, den Fehler zwischen Ziel-Output und berechneten Output des Modells zu minimieren; dies repräsentiert ein statistisches Optimierungsproblem. Dazu wird ein Optimierer eingesetzt. Ist der jeweilige Fehler minimiert, sind die Gewichte optimal und man bezeichnet das Netzwerk als optimal trainiert. Nach erfolgreichem Training wird der Algorithmus die Schneidqualität gemäß den trainierten Kriterien selbständig erkennen.

Es sei bemerkt, dass neben den bevorzugten Deep-Learning Algorithmen alternativ oder zusätzlich auch andere Algorithmen verwendet werden können, z.B. polynomiale Regressionsmodelle.

Als weiterführende vorteilhafte Ausgestaltung der Erfindung kann ein Online-Learning-Verfahren integriert werden. Dazu wird dem nach obigen Methoden trainierten Modell ein Algorithmus zur adaptiven Einstellung gewisser Modellparameter nachgeschaltet. Dies kann z.B. mittels eines Reinforcement-Learning-Algorithmus oder mittels eines Sparce-Coding-Algorithmus (siehe Blakely, C.: "Adaptive Real-Time Learning and Prediction, A Sparce Hierarchical Machine Learning Algorithm", SDS 2019*; im Internet abrufbar unter: https:*//*sds2019.ch*/*_Resources*/*Persistent*/*11a5f51326cf4b9fbbc490a1081af9d2d7bc6971*/*C. %20Blakely%2C%20signifAiFX%2C%20Adaptive%20Real-Time%20Learning%20and%20Prediction.pdf*) implementiert werden. Dadurch kann die Schätzung der Schneidqualität in Echtzeit während des Schneidens, oder intermittierend mittels Feedback durch den Maschinen-Operateur angepasst werden. Reinforcement Learning oder Verstärkungslernen ist in diesem Zusammenhang als ein Verfahren des maschinellen Lernens zu verstehen, das durch selbständige Aktionen innerhalb eines Systems versucht, eine Belohnung zu maximieren. Dabei ist es nicht nötig, dass alle Daten gelabelt sind.

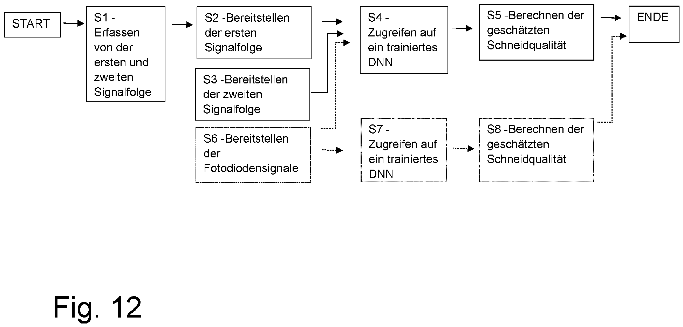

**Fig. 12** zeigt ein Ablaufdiagramm des Schätzverfahrens. Nach dem Start des Verfahrens, werden in Schritt S1 zumindest die erste und die zweite Signalfolge erfasst. In Schritt S2, S3 werden die erfasste erste und zweite Signalfolge bereitgestellt. In Schritt S4 wird auf das trainierte neuronale Netzwerkmodell, insbesondere das DNN, z.B. ein CNN, mit optionaler Schicht zur Sensorfusion der erfassten ersten und zweiten Signalfolge, zugegriffen, um in Schritt S5 das Ergebnis mit einer Schätzung der Bearbeitungsqualität zu den gemessenen Signalfolgen bereitzustellen.

Falls zusätzlich zu den Kamerabildern noch andere Sensorsignale, wie z.B. Fotodiodensignale zur Klassifizierung der geschätzten Bearbeitungsqualität berücksichtigt werden sollen, kann eine Schicht des neuronalen Netzwerkes zur Sensorfusion ausgebildet sein. In dieser Ausführungsform der Erfindung werden die unterschiedlichen Eingangsdaten in ein und demselben maschinellen Lernmodell (bzw. tiefen Netzwerk) gerechnet.

In einer alternativen Ausführungsform der Erfindung kann auch ein separates, weiteres neuronales Netzwerk zur Implementierung eines weiteren maschinellen Lernmodells bereitgestellt werden, das zur Klassifizierung der Fotodiodensignale dient und spezifisch für diese Signalvariante trainiert worden ist. Dann können wie in Fig. 12 gestrichelt - da optional - dargestellt, in Schritt S6 die Signale der Fotodioden an das Inputlayer des trainierten weiteren neuronalen Netzwerkes bereitgestellt werden, auf das dann in Schritt S7 zum Zwecke der Klassifikation bzw. zur Vorhersage der Bearbeitungsergebnisqualität in Schritt S8 zugegriffen wird. Diese Implementierung hat den Vorteil, dass das Klassifikationsergebnis auch dann zuverlässig bereitgestellt werden kann, wenn die Kamera ausfällt.

Für die Sensorfusion können unterschiedlichen Algorithmen und Prozesse verwendet werden. Grundsätzlich wird immer pro Signalfolge eine Netzwerkarchitektur zu einem Gesamtnetz kombiniert werden. Dies können je nach Signalfolge identische oder verschiedene Netzarchitekturen sein. Die Fusionierung kann einerseits durch einen simplen Sensorfusionslayer realisiert werden. In diesem Fall wird alles zusammen trainiert. In einer alternativen vorteilhaften Ausführungsform der Erfindung werden die einzelnen Netze separat trainiert, um die bestmöglichen Features zu finden. Anschließend werden bei beiden Netzen die Klassifikationslayer abgeschnitten. Die übrigbleibenden Feature-Extractor-Layer werden anschließend fusioniert und der neue Klassifikationslayer wird damit trainiert. In dieser Ausführungsform wird aus mehreren einzelnen Netzen ein kombiniertes neuronales Netzwerk gebaut. Das Training würde somit über mehrere Schritte stattfinden.

Beide Varianten entsprechen einem End-To-End Training. Bei der zuletzt genannte Variante findet das Training in mehreren Schritten statt. Während dieser Trainingsphase fließt kein Fachexpertenwissen ein, so dass es sich immer noch um ein automatisches End-To-End Training handelt.

Die Sensorfusion wird grundsätzlich bei mehreren Signaltypen, wie z.B. von Diode und Kamera, angewendet. Der Typ der jeweiligen Signale ist dabei für die Sensorfusion ohne Bedeutung. So kann auch eine einfache Sensorfusion zwischen ähnlichen und/oder gleichen Signaltypen ausgeführt werde, wie z.B. eine Sensorfusion zwischen der erfassten ersten und der erfassten zweiten Signalfolge, also z.B. die Signalfolgen mit beleuchteten und unbeleuchteten Aufnahmen, und dies, obwohl in beiden Signalfolgen grundsätzlich der gleiche Sensortyp (optisch) verwendet wurde. Ebenso sind auch andere Signalfolgekombinationen möglich.

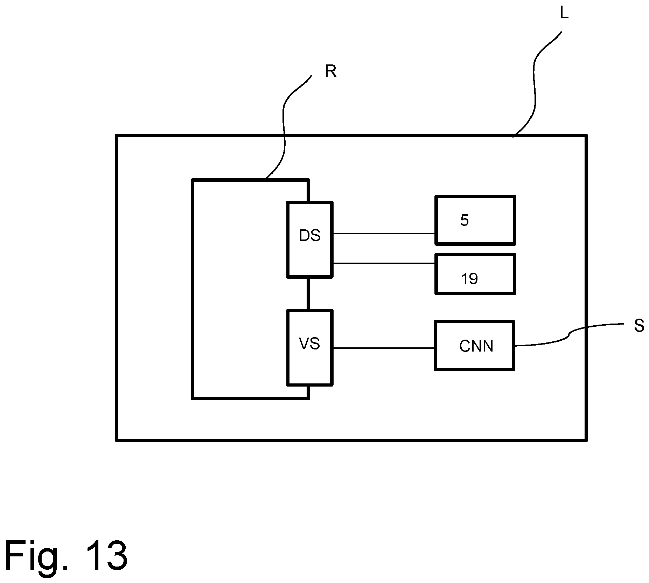

**Fig. 13** zeigt eine schematische Darstellung von Modulen und Einheiten eines Systems zur Qualitätsschätzung der Laserbearbeitungsanlage L. Dazu ist diese mit einer Recheneinheit R ausgebildet oder über eine Netzwerkschnittstelle mit selbiger verbunden. Die Laserbearbeitungsanlage L hat eine Kamera 5 und einen Speicher S, in dem zumindest ein trainiertes neuronales Netzwerk (DNN, CNN) gespeichert ist. Die Recheneinheit R kann über eine Datenschnittstelle DS die von der Kamera 5 und/oder optional von den Fotodioden 19 erfassten Signalfolgen empfangen und mit diesen auf den Speicher S zugreifen, so dass das CNN das Ergebnis mit einer Schätzung der Bearbeitungsqualität berechnen kann.

Es sei bemerkt, dass der Algorithmus in einer bevorzugten Ausführungsform der Erfindung weiterentwickelt ist, so dass die Maschine mit dem implementierten Verfahren zur Prozessüberwachung beim Kunden weiterlernt. Dies kann, wie bereits oben erwähnt, z.B. mit einem Reinforcement-Learning-Verfahren implementiert werden, oder mit einem Sparse Coding Algorithmus. Je nach Kunde, kann die Schneidqualität unterschiedlich beurteilt werden. Eine Schneidqualität, die dem einen Kunden noch akzeptabel erscheint, kann bei einem anderen als ungenügend beurteilt werden. Ein Vorteil des hier als Lösung beschriebenen Algorithmus ist es, dass die Sensitivität des Kunden erlernt und bei der Prozessüberwachung individuell und Anlagen-spezifisch berücksichtigt wird.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

1 Werkstück
2 Leuchtquelle(n), insbesondere Leuchtdiode
3 Dichroitischer Spiegel
4 Beobachtetes Licht
5 Kamerablock
6 Bearbeitungsstrahl des Lasers
7 Transportfaser
8 Filter
9 Beleuchtungslicht
10 Blende
11 Fokussierlinse der Kamera
12 Unschärfekreis
13 Tiefenschärfe
14 Bildebene
15 Kamerasensor
16 Schneidfront
17 Düsenöffnung
18 Schnittspalt
19 Fotodiode(n)
20 Prozessleuchten oben
21 Prozessleuchten unten
22 Fokussierlinse des Lasers der Laserbearbeitungsmaschine
S1 Erfassen der ersten und zweiten Signalfolge, insbesondere alternierendes Erfassen
S2 Bereitstellen der erfassten ersten Signalfolge
S3 Bereitstellen der erfassten zweiten Signalfolge
S4 Zugreifen auf ein trainiertes maschinelles Lernmodell, insbesondere auf ein CNN
S5 Berechnen des Ergebnisses mit der geschätzten Bearbeitungsqualität S6 Bereitstellen von Fotodiodensignalfolgen
S7 Zugreifen auf ein trainiertes maschinelles Lernmodell
S8 Berechnen des Ergebnisses
R Recheneinheit
L Laseranlage
S Speicher zur Speicherung des trainierten Modells
DS Datenschnittstelle
VS Verarbeitungsschnittstelle

## Patentansprüche

1. Verfahren zur Prozessüberwachung eines Laserbearbeitungsprozesses zur Schätzung einer Bearbeitungsqualität, mit folgenden Schritten, die in Echtzeit während des Bearbeitungsprozesses ausgeführt werden:
- Bereitstellen (S2) mindestens einer erfassten ersten Signalfolge mit einem ersten Merkmal von der Bearbeitungszone;
- Bereitstellen (S3) mindestens einer erfassten zweiten Signalfolge mit einem zweiten Merkmal von der Bearbeitungszone;
- Zugreifen (S4) auf zumindest ein trainiertes neuronales Netzwerk mit mindestens der erfassten ersten und zweiten Signalfolge, um ein Ergebnis zur Schätzung der Bearbeitungsqualität zu berechnen (S5).

2. Verfahren nach Anspruch 1, bei dem die erste Signalfolge und/oder die zweite Signalfolge eine optische Signalfolge ist und mit demselben optischen Sensor (5) erfasst werden und vorzugsweise in alternierender Form.

3. Verfahren nach einem der vorangehenden Ansprüche, bei dem als neuronales Netzwerk ein Deep Neural Network (DNN) angewendet wird und bei dem während des Trainings des Deep Neural Network (DNN) automatisch diejenigen Merkmale der erfassten ersten und zweiten Signalfolge, insbesondere diejenigen räumlichen und/oder zeitlichen Eigenschaften, bestimmt werden, die für die Schätzung der Bearbeitungsqualität relevant und zur Berechnung des Ergebnisses zu berücksichtigen sind.

4. Verfahren nach einem der vorangehenden Ansprüche, bei dem das Ergebnis mit der geschätzten Bearbeitungsqualität verwendet wird, um den Laserbearbeitungsprozess zu regeln.

5. Verfahren nach einem der vorangehenden Ansprüche, bei dem das Erfassen der ersten und zweiten Signalfolge jeweils synchronisiert erfolgt, so dass eine Entwicklung über die Zeit des Bearbeitungsprozesses beobachtbar ist, wobei Zeitstempel für das Training des maschinellen Lernmodells verwendet werden können, um eine örtliche Zuordnung der Signale zu den geschnittenen Konturen am Werkstück (1) bereitstellen zu können.

6. Verfahren nach einem der vorangehenden Ansprüche, bei dem das Verfahren umfasst:
- Bereitstellen (S6) von erfassten Fotodiodensignalen von einer Menge von Fotodioden;
- Zugreifen (S7) auf das trainierte maschinelle Lernmodell und/oder auf ein weiteres trainiertes maschinelle Lernmodell mit den erfassten Fotodiodensignalen, um das Ergebnis zur Schätzung der Bearbeitungsqualität zu berechnen (S8).

7. Verfahren nach einem der vorangehenden Ansprüche, bei dem die erfasste erste und zweite Signalfolge eine optische Signalfolge ist und wobei die erfasste erste Signalfolge ein Folge von Bildern mit Beleuchtung ist und bei dem die erfasste zweite Signalfolge eine Folge von Bildern ohne Beleuchtung ist, wobei zur Beleuchtung zumindest eine Leuchtquelle (2) verwendet wird.

8. Verfahren nach einem der vorangehenden Ansprüche, bei dem die erfasste erste Signalfolge eine Folge von Bildern mit einer ersten Kameraeinstellung und bei dem die erfasste zweite Signalfolge eine Folge von Bildern mit einer zweiten Kameraeinstellung ist.

9. Recheneinheit (R) zur Prozessüberwachung eines Laserbearbeitungsprozesses einer Laserbearbeitungsmaschine (L) zur Schätzung einer Bearbeitungsqualität, mit:
- Einer Datenschnittstelle (DS) zu zumindest einem Sensor (5), der während des Bearbeitungsprozesses zum Erfassen einer ersten Signalfolge mit einem ersten Merkmal und zum Erfassen einer zweiten Signalfolge mit einem zweiten Merkmal jeweils von der Bearbeitungszone bestimmt ist;
- Einer Verarbeitungsschnittstelle (VS) zu einem Speicher (S), in dem zumindest ein trainiertes neuronales Netzwerk (DNN) gespeichert ist, auf das mit zumindest der erfassten ersten und zweiten Signalfolge zugegriffen wird, um ein Ergebnis zur Schätzung der Bearbeitungsqualität zu berechnen.

10. Recheneinheit (R) nach dem unmittelbar vorangehenden Anspruch, bei dem der Speicher (S) in der Recheneinheit (R) integriert ist.

11. Laserbearbeitungsanlage (L) mit einer Recheneinheit (R) nach dem vorangehenden auf die Recheneinheit gerichteten Anspruch.

12. Laserbearbeitungsanlage (L) nach dem vorangehenden, auf die Laserbearbeitungsanlage gerichteten Anspruch, bei der der zumindest eine Sensor ein optischer Sensor ist und insbesondere eine Kamera (5) umfasst und fakultativ zumindest eine Fotodiode (19) umfassen kann.

13. Laserbearbeitungsanlage (L) nach Anspruch 11 oder 12, bei der eine Achse des zumindest einen optischen Sensors koaxial und/oder schräg, insbesondere in einem Winkelbereich zwischen 5° und 20° relativ zu einer Bearbeitungsachse eines Laserbearbeitungskopfes angeordnet ist.

14. Laserbearbeitungsanlage (L) nach einem der Ansprüche 11 bis 13, bei der eine Menge von Leuchtquellen (2) angeordnet ist, die zur Beleuchtung der Prozesszone bei der Erfassung der ersten Signalfolge dienen.

15. Laserbearbeitungsanlage (L) nach Anspruch 14, bei der die Menge von Leuchtquellen und der zumindest eine optische Sensor koaxial zur Bearbeitungsachse eines Lasers angeordnet ist.

16. Laserbearbeitungsanlage (L) nach Anspruch 11, bei dem die Menge von Leuchtquellen (2) und der zumindest eine optische Sensor außerhalb des Bearbeitungskopfes der Laserbearbeitungsanlage (L) angeordnet ist und insbesondere in räumlicher Nähe zu den Netzwerkschnittstellen des optischen Sensors.

17. Laserbearbeitungsanlage (L) nach einem der Ansprüche 11 bis 16, bei dem der Laser der Laserbearbeitungsanlage (L) zur Erzeugung der Beleuchtung dient und bei der ein dichroitischer Spiegel oder ein anderes Filterelement, der/das im Strahlengang des Laserlichts vor einem Werkstück angeordnet ist, für das Beleuchtungslicht annähernd 50% transmissiv und annähernd 50% reflektiv ist.

18. Computerprogrammprodukt mit Computerprogrammcode zur Durchführung aller Verfahrensschritte des Verfahrens nach einem der Verfahrensansprüche, wenn das Computerprogramm auf einem Computer ausgeführt wird.
